# FASCICULE DE BREVET EUROPEEN

(11) **EP 1 531 026 B1**
(45) Date de publication et mention de la délivrance du brevet: **21.06.2006**
(21) Numéro de dépôt: 04300751.7
(22) Date de dépôt: 02.11.2004
(51) Int. Cl.: B23Q 11/08, B25J 19/00

(54) **Housse de fenêtre pour un robot**
Fensterabdichtung für einen Roboter
Window sealing member for a robot

(30) Priorité: 05.11.2003 FR 0350795
(43) Date de publication de la demande: 18.05.2005
(73) Titulaire: Atelier Systèmes de Protection SAS, 54690 Eulmont (FR)
(72) Inventeur: Petit, Philippe, 54670 Millery (FR); Grandieu, Fabien, 54690 Eulmont (FR)
(74) Mandataire: Vièl, Frédérique

(56) Documents cités:
- EP-A- 0 978 349
- EP-A- 1 122 039
- DD-A- 234 823
- DE-A- 4 214 928
- FR-A- 1 248 526

## Description

L'invention concerne une housse de fenêtre pour un robot, la housse ayant sensiblement la forme d'une manche étant fixée par l'une de ses extrémités autour de la fenêtre d'une cabine et par son autre extrémité au robot tout en permettant à celui-ci d'effectuer les mouvements nécessaires à sa tâche, la housse séparant l'intérieur de la cabine dans laquelle se trouve une partie du robot, de l'extérieur de la dite cabine où se trouvent les autres parties du robot.

Les housses de fenêtres sont utilisées dans des cabines dans lesquelles un traitement (par exemple un lavage) doit avoir lieu, ce traitement étant effectué par un robot. Une housse de fenêtre est alors fixée de manière étanche sur la fenêtre de la cabine et sur le robot, par exemple sur le bras de celui-ci, afin d'isoler l'intérieur de la cabine de l'extérieur où se trouvent les autres parties du robot. La housse doit permettre tous les mouvements du robot sans être trop ample, car ceci amènerait à la formation de poches ou risquerait de gêner le mouvement. C'est pour cette raison que les housses de fenêtre sont normalement fabriquées sur mesure en fonction des mouvements envisagés. Ceci est relativement coûteux et en cas de problème, il n'y a souvent pas de housse de rechange. Une autre solution consiste à établir une gestion des stocks avec beaucoup de références afin de maintenir la production en cas de rupture d'une housse.

Des exemples de telles housses ou d'autres types de protection sont connus notamment des documents suivants.

On connaît du document FR 1 248 526 A un manchon en matière souple fixé de façon étanche d'une part à la partie supérieure du bras d'un télémanipulateur et, d'autre part, sur l'orifice de la cellule de travail, de telle façon qu'au cours du travail le manchon soit replié sur lui-même et ne joue aucun rôle, alors que lors de l'enlèvement du bras, il se déplie et permet, d'une part de former une enveloppe étanche détachable dans laquelle est enfermé le bras, et d'autre part, d'obturer l'orifice de la cellule de travail. Un tel manchon ne peut pas servir dans le cas envisagé dans le cadre de l'invention, sinon il se développerait lors du mouvement le plus large et gênerait les mouvements suivants du bras.

Le document EP 1 122 039 A1 divulgue une housse souple fixée hermétiquement d'une part à la fenêtre d'une cabine et d'autre part à la main d'un robot. Aucune indication n'est faite sur les dimensions de la housse par rapport au bras du robot.

Le document DD 234 823 A1 décrit une cabine de grenailleuse, l'objet à grenailler étant placé à l'intérieur d'une cabine, la grenailleuse étant placée sur un rail à l'extérieur de cette cabine. Le bras de la grenailleuse passe à travers une fenêtre pouvant coulisser horizontalement et verticalement pour accompagner la tête de la grenailleuse. Une housse flexible non détaillée est placée entre les bords de la fenêtre et la buse de la grenailleuse.

Le document EP 0 978 349 A2 divulgue une protection ayant la forme d'un soufflet ou d'une paroi formée de tôles pouvant coulisser les unes par rapport aux autres de façon télescopique. De même, le document DE 42 14 928 A1 divulgue une protection formée par des tôles articulées entre elles de sorte qu'elles peuvent être rangées en accordéon.

L'objectif de l'invention est de prévoir une housse de fenêtre selon le préambule qui s'adapte aux mouvements du robot en permettant ainsi une gestion simplifiée des stocks.

Cet objectif est atteint selon l'invention par le fait que la housse présente sur sa périphérie plusieurs plis sensiblement perpendiculaires à l'axe de la manche, superposables, fixés initialement sur la fenêtre, des moyens étant prévus pour libérer lors du premier cycle de mouvements du robot la quantité de housse nécessaire.

Cette housse qui comporte des plis de réserve est initialement fixée sur la cabine. Lors du premier cycle de mouvements du robot, celui-ci arrache les fixations de la housse sur la fenêtre dans la mesure où elles gênent ses mouvements. Le robot libère ainsi lui-même le ou les plis ou partie de plis dont il a besoin lors du premier cycle de mouvements et adapte de cette manière la housse à ses besoins en libérant la quantité de housse nécessaire. Ceci permet de fabriquer des housses de fenêtre en série au lieu de les fabriquer sur mesure.

Dans une première variante de l'invention, chaque pli est pourvu de languettes de fixation permettant de fixer initialement les plis sur la fenêtre et pouvant être arrachées en cas de besoin par le mouvement du robot.

Il est avantageux que les languettes présentent des perçages appropriés, par exemple en croix, permettant leur fixation sur la fenêtre de la cabine. Les perçages en croix servent à la fixation des languettes tout en permettant qu'ils cèdent assez facilement lors du premier cycle de mouvements du robot.

Il est prévu dans le cadre de l'invention de fixer les languettes de la housse au moyen d'écrous sur des goujons filetés disposées tout autour de la fenêtre, un contre cadre serrant au moins les languettes d'un des plis contre le pourtour de la fenêtre. Cette variante permet notamment de serrer tous les plis au moyen d'un premier contre cadre contre le pourtour de la fenêtre permettant ainsi de fixer des housses selon l'invention sur des fenêtres existantes.

Une autre variante consiste à placer le premier contre cadre entre le premier et le deuxième pli de la housse côté fenêtre et de prévoir un deuxième contre cadre pour serrer les autres plis contre le pourtour de la fenêtre. Cette variante sera surtout utilisée sur des nouvelles installations car elle facilite encore la libération de la housse par le robot.

Dans le cadre de l'invention des élastiques s'étendant sensiblement parallèlement à l'axe de la housse sont prévus sur celle-ci afin de maintenir sa forme. Ces élastiques servent à structurer la housse et à la maintenir en place.

Dans la partie suivante, des exemples de l'invention sont décrits à l'aide de dessins qui montrent:
- Fig. 1 et Fig. 2: des vues en perspective de la housse de l'invention,
- Fig. 3: une vue latérale d'une cabine et d'un robot, la fenêtre de la cabine étant équipée d'une housse de l'invention,
- Fig. 4 et Fig. 5: en détail deux variantes de la fixation de la housse représentée à la Fig. 3.

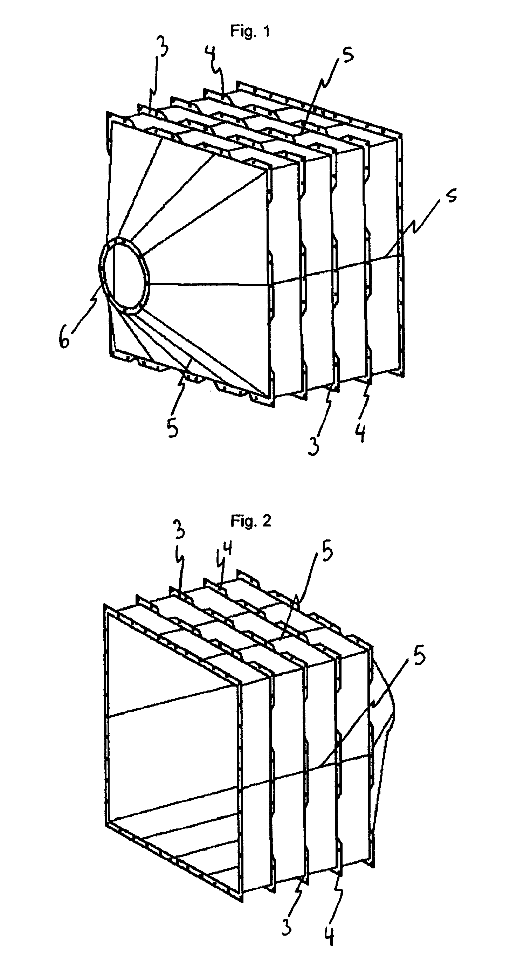

Il ressort des figures 1 et 2 que la housse (1), ayant sensiblement la forme d'une manche, présente sur sa périphérie plusieurs plis (2) parallèles, sensiblement perpendiculaires à l'axe de la housse (1) et qui constituent une réserve de tissu afin de permettre au bras d'un robot relié à la housse (1) d'effectuer tous les mouvements nécessaires à sa tâche. Lors de l'installation de la housse (1) sur la fenêtre d'une cabine, les plis (2) sont fixés sur des goujons au moyen de languettes de fixation (3) prévues au niveau desdits plis (2). Dans ce but, les languettes de fixation (3) présentent des trous ou perçages (4), notamment en croix, qui peuvent être traversés par les goujons de fixation. Les languettes de fixation (3) peuvent être constituées du même matériau que le reste de la housse (1) ou d'un autre matériau et elles peuvent par exemple être cousues sur la housse. Elles sont placées de préférence dans les coins de la housse (1) et - en fonction de la taille, de la forme de la housse (1) et des sollicitations - entre deux coins, notamment au milieu du panneau.

Des élastiques (5) placés dans le sens longitudinal de la housse sont prévus pour maintenir la forme de celle-ci. La housse (1) présente à son extrémité opposée à la fenêtre une bride (6) permettant la fixation de la housse (1) sur le bras d'un robot.

La disposition du tissu de réserve sous forme de plis évite que le mouvement du robot soit gêné par un excès de tissu à un endroit ou que des poches se forment, notamment en cas de présence de liquides de traitement dans la cabine.

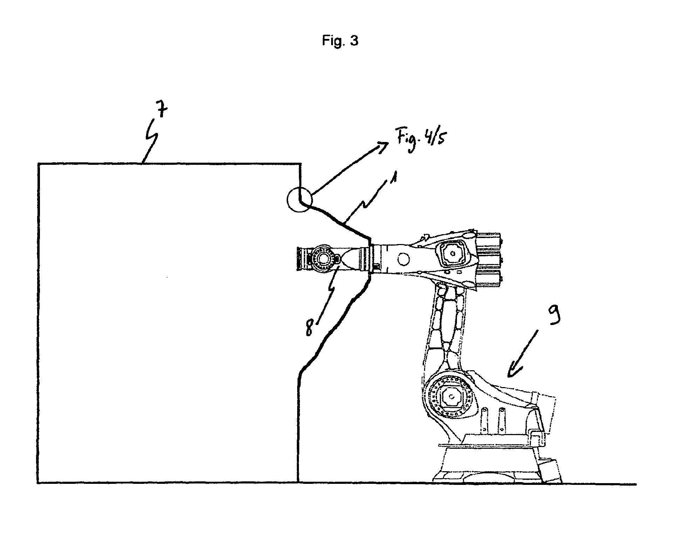

La figure 3 montre la housse (1) qui sépare l'intérieur d'une cabine (7), dans laquelle le bras (8) d'un robot (9) doit effectuer une tâche, de l'extérieur où se trouvent les autres parties du robot (9). La housse est d'une part fixée de manière étanche sur le pourtour (10) de la fenêtre (11) de la cabine (7) et d'autre par sur le bras (8) du robot (9). La housse (1) doit donc à la fois permettre au robot (9) d'effectuer les mouvements nécessaires à l'exécution de sa tâche sans être trop ample ce qui gênerait les mouvements.

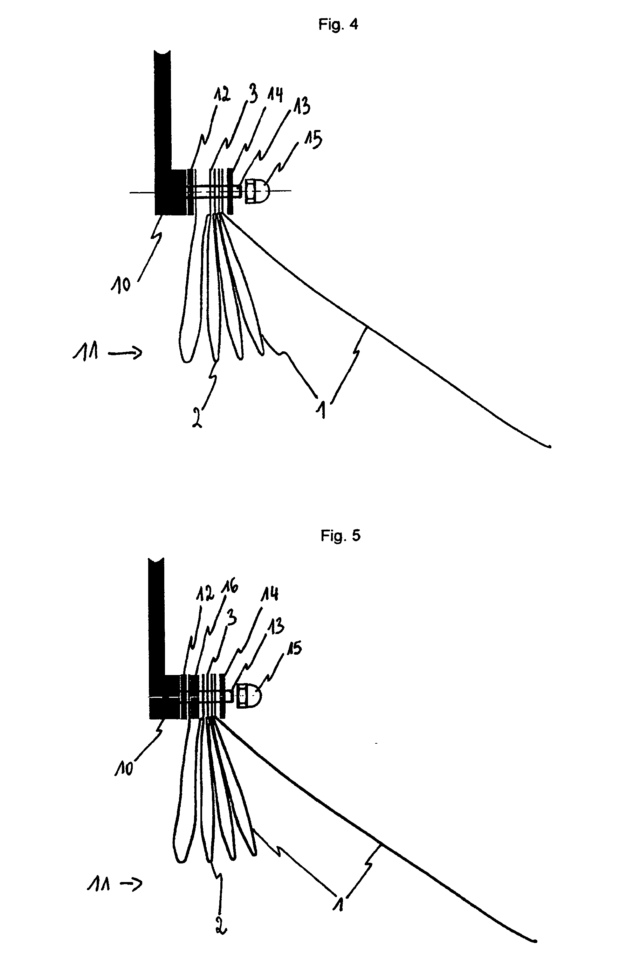

Dans ce but, la réserve de tissu de la housse (1) est fixée initialement - comme le montrent les figures 4 et 5 - au pourtour (10) de la fenêtre (11).

La figure 4 montre un premier exemple d'exécution: Sur le pourtour (10) de la fenêtre (11), un joint (12), ici en THN, assure l'étanchéité. Sur des goujons (13), dont au moins la partie libre est filetée, on a fixé la première languette de fixation (3) de la housse (1) et empilé par-dessus les autres languettes de fixation (3) de manière que la partie libre de la housse (1) entourant le bras (8) du robot (9) dans sa position de départ soit assez tendue. Le tout est fixé par un premier contre cadre (14) qui lui-même est fixé au moyen d'écrous (15) sur les goujons (13). Cette variante est particulièrement adaptée pour les cabines existantes.

Il est également possible, comme le montre la figure 5, de mettre la première languette de fixation (3) de la housse (1) entre le joint (12) et un premier contre cadre (16). Les différentes languettes de fixation (3) sont ensuite empilées, suivies d'un deuxième contre cadre (14) qui peut être en une pièce ou en plusieurs parties, et des écrous (15). La variante de la figure 5 est notamment prévue pour les nouvelles installations.

Les deux exemples d'exécution montrés aux figures 4 et 5 ont le même principe de fonctionnement: La housse (1) est fixée initialement de manière à être relativement tendue lorsque le bras (8) du robot (9) est dans sa position de départ. Lors du premier cycle de mouvements, le bras (8) du robot (9) libère la quantité de tissu nécessaire sans toutefois en libérer de trop. La libération du tissu se fait dans l'exemple présenté en arrachant les languettes de fixation (3) des goujons (13) aux endroits où la housse (1) était trop courte initialement.

L'arrachement des languettes (3) fonctionne tant que la résistance des languettes de fixation (3) sur les tiges (13) est plus faible que celle de la housse (1) elle-même. Il peut être facilité par des perçages (4) en croix ou tout autre moyen facilitant le déchirement des languettes de fixation (3) suite à la traction du bras (8) du robot (9). Le déchirement des languettes de fixation (3) peut se faire de manière asymétrique ou symétrique en fonction du mouvement effectué par le bras (8) du robot (9); il est donc possible de libérer un coin de la housse (1) sans libérer les autres. La housse (1) est donc une housse à diagonales réglables.

De cette façon, le robot ajuste la housse lors du premier cycle de mouvements en fonction des besoins ce qui permet de prévoir des housses standard au lieu de housses fabriquées sur mesure. Ceci permet d'une part d'avoir une ou plusieurs housses de réserve qui pourront être adaptées au besoin du robot par ce dernier, et d'autre part de diminuer le nombre de références différentes en stock. Il est donc possible de remplacer le "sur mesure" par un produit standard. Les frais de stockage sont donc considérablement diminués, notamment s'il y a plusieurs cabines avec des fenêtres de dimensions identiques et des robots identiques.

### Liste des références:

- 1: Housse
- 2: Plis
- 3: Languette de fixation
- 4: Trous ou perçage
- 5: Elastiques
- 6: Bride
- 7: Cabine
- 8: Bras
- 9: Robot
- 10: Pourtour de la fenêtre
- 11: Fenêtre
- 12: Joint
- 13: Goujons
- 14: Premier contre cadre
- 15: Écrou
- 16: Deuxième contre cadre

## Revendications

1. Housse de fenêtre pour un robot (9), la housse (1) ayant sensiblement la forme d'une manche étant fixée par l'une de ses extrémités autour de la fenêtre d'une cabine (7) et par son autre extrémité au robot (9) tout en permettant à celui-ci d'effectuer les mouvements nécessaires à sa tâche, la housse (1) séparant l'intérieur de la cabine (7) dans laquelle se trouve une partie du robot (9), de l'extérieur de la dite cabine (7) où se trouvent les autres parties du robot (9), **caractérisée en ce que** la housse (1) présente sur sa périphérie plusieurs plis (2) sensiblement perpendiculaires à l'axe de la manche, superposables, fixés initialement sur la fenêtre (11), des moyens étant prévus pour libérer lors du premier cycle de mouvements du robot la quantité de housse (1) nécessaire.

2. Housse selon la revendication 1, **caractérisée en ce que** les moyens de libération sont constitués par des languettes (3) de fixation prévues sur chaque pli (2), lesdites languettes (3) permettant de fixer initialement les plis (2) sur la fenêtre (11) et pouvant être arrachées en cas de besoin par le mouvement du robot (9).

3. Housse de fenêtre selon la revendication 2, **caractérisée en ce que** les languettes de fixation (3) présentent des perçages (4) en croix permettant leur fixation sur la fenêtre (11) de la cabine (7).

4. Housse de fenêtre selon l'une des revendications 2 ou 3, **caractérisée en ce que** les languettes (3) de la housse (1) sont fixées au moyen d'écrous (15) sur des goujons (13) disposées tout autour de la fenêtre (11), un contre cadre (14) serrant au moins les languettes (3) d'un des plis (2) contre le pourtour (10) de la fenêtre (11).

5. Housse selon la revendication 4, **caractérisée en ce que** le premier contre cadre (14) est placé entre le premier et le deuxième pli (2) de la housse côté fenêtre et qu'un deuxième contre cadre (16) est prévu pour serrer les autres plis (2) contre le pourtour (10) de la fenêtre (11).

6. Housse selon l'une des revendications précédentes, **caractérisée en ce que** des élastiques (5) s'étendant sensiblement parallèlement à l'axe de la housse (1) sont prévus sur celle-ci afin de maintenir sa forme.

## Claims

1. Window cover for a robot (9), the cover (1) having substantially the form of a sleeve being fixed by one of its ends around the window of a cabin (7) and by its other end to the robot (9) whilst enabling the latter to perform the movements necessary for its task, the cover (1) separating the inside of the cabin (7) in which part of the robot (9) is situated from the outside of the said cabin (7) where the other parts of the robot (9) are situated, **characterised in that** the cover (1) has on its periphery several superimposable folds (2) substantially perpendicular to the axis of the sleeve, fixed initially to the window (11), means being provided for releasing the necessary quantity of cover (1) during the first cycle of movements of the robot.

2. Cover according to claim 1, **characterised in that** the release means consist of fixing tongues (3) provided on each fold (2), the said tongues (3) making it possible to initially fix the folds (2) to the window (11) and to be able to be pulled off if required by the movement of the robot (9).

3. Window cover according to claim 2, **characterised in that** the fixing tongues (3) have cruciform apertures (4) enabling them to be fixed to the window (11) of the cabin (7).

4. Window cover according to one of claims 2 or 3, **characterised in that** the tongues (3) of the cover (1) are fixed by means of nuts (15) on studs (13) disposed all around the window (11), a back-frame (14) clamping at least the tongues (3) of one of the folds (2) against the periphery (10) of the window (11).

5. Cover according to claim 4, **characterised in that** the first back-frame (14) is placed between the first and second folds (2) of the cover on the window side and **in that** a second back-frame (16) is provided for clamping the other folds (2) against the periphery (10) of the window (11).

6. Cover according to one of the preceding claims, **characterised in that** lengths of elastic (5) extending substantially parallel to the axis of the cover (1) are provided on the latter in order to keep its shape.

## Patentansprüche

1. Fensterhülle für einen Roboter (9), wobei die Hülle (1) im Wesentlichen die Form eines Ärmels aufweist, die mit ihrem einen Ende um das Fenster einer Kabine (7) und mit ihrem anderen Ende am Roboter (9) befestigt ist, wobei diesem ermöglicht wird, die für seine Aufgabe erforderlichen Bewegungen auszuführen, wobei die Hülle (1) das Innere der Kabine (7), in der sich ein Teil des Roboters (9) befindet, von dem Äußeren der Kabine (7), wo sich die anderen Teile des Roboters (9) befinden, trennt, **dadurch gekennzeichnet, dass** die Hülle (1) an ihrem Umfang mehrere Falten (2) aufweist, die im Wesentlichen senkrecht zur Achse des Ärmels, übereinanderlegbar und anfänglich an dem Fenster (11) befestigt sind, wobei Mittel vorgesehen sind, um bei dem ersten Bewegungskreislauf des Roboters die erforderliche Menge der Hülle (1) freizugeben.

2. Hülle gemäß Anspruch 1, **dadurch gekennzeichnet, dass** die Mittel zum Freigeben aus Befestigungslaschen (3) gebildet sind, die an jeder Falte (2) vorgesehen sind, wobei die Laschen (3) ermöglichen, die Falten (2) anfänglich an dem Fenster (11) zu befestigen und bei Bedarf durch die Bewegung des Roboters (9) abgerissen werden können.

3. Fensterhülle gemäß Anspruch 2, **dadurch gekennzeichnet, dass** die Befestigungslaschen (3) Kreuzschlitze (4) aufweisen, welche deren Befestigung an dem Fenster (11) der Kabine (7) ermöglichen.

4. Fensterhülle gemäß Anspruch 2 oder 3, **dadurch gekennzeichnet, dass** die Laschen (3) der Hülle (1) mittels Muttern (15) auf Stiftschrauben (13), die um das Fenster (11) angeordnet sind, befestigt werden, wobei ein Gegenrahmen (14) wenigstens die Laschen (3) einer der Falten (2) gegen den äußeren Umfang (10) des Fensters (11) festklemmt.

5. Hülle gemäß Anspruch 4, **dadurch gekennzeichnet, dass** der erste Gegenrahmen (14) zwischen der ersten und der zweiten Falte (2) der Hülle auf Seite des Fensters angeordnet ist und **dadurch**, dass ein zweiter Gegenrahmen (16) vorgesehen ist, um die anderen Falten (2) gegen den äußeren Umfang (10) des Fensters (11) festzuklemmen.

6. Hülle gemäß einem der vorausgegangenen Ansprüche, **dadurch gekennzeichnet, dass** Gummibänder (5), die sich im wesentlichen parallel zur Achse der Hülle (1) erstrecken, an dieser vorgesehen sind, um deren Form zu erhalten.
